# DEMANDE DE BREVET EUROPEEN

(11) **EP 0 928 822 A1**
(43) Date de publication de la demande: **14.07.1999**
(21) Numéro de dépôt: 97935580.7
(22) Date de dépôt: 13.08.1997
(51) Int. Cl.: C09J 7/02

(54) **NOUVELLE DISPOSITION LINEAIRE D'ADHESIFS DE CONTACT POUR APPLICATION MULTI-USAGE ET AVEC POSSIBILITE DE REUTILISATION**

(30) Priorité: 29.08.1996 ES 9601871
(71) Demandeur: Millan Calvo, Fernando, E-28023 Madrid (ES)
(72) Inventeur: Millan Calvo, Fernando, E-28023 Madrid (ES)
(74) Mandataire: Carpintero Lopez, Francisco
(86) Numéro de dépôt international: ES9700211
(87) Numéro de publication internationale: WO9808908

(57) **Abrégé**

Nouveau dispositif linéaire d'adhésif de contact à applications multiples et avec la possibilité de réutilisation qui consiste en l'incorporation sur le revers d'un ruban (3) de papier silicone, paraffiné ou similaire, d'un cordon (4) de grosseur déterminée, le ruban (3) s'incorporant avec le cordon (4) sur un support ou mandrin (2), ce qui constitue le nouveau dispositif linéaire d'adhésif (1).

## Description

### Objet de l'invention

Ce mémoire descriptif concerne une demande de brevet d'invention relatif à un nouveau dispositif lineaire d'adhésifs de contact à usages multiples et pouvant être réutilisé, dont la finalité évidente se trouve dans sa présentation et distribution sous forme de ruban, pouvant être enroulé en un rouleau, qui peut être en papier de silicone, qui présente dans la zone centrale du revers une ligne ou bande adhésive ou enduite de colle de contact pouvant être réutilisée et permettre son utilisation pour de multiples applications, par exemple l'union ou collage de carreaux. verres, bois, plastiques sur une superficie plate, pouvant également être utilisée pour coller des objets tridimensionnels ou pour unir entre eux des pièces ou des éléments, et ayant la possibilité essercielle de permettre après collage une séparation ultérieure, et pouvant être employée pour des reliures ou pour fixer des feuilles de papier sur des couvertures, etc.

### Champs d'application

Cette invention a son champ d'application dans l'industrie consacrée à la fabrication et distribution de produits adhésifs.

### Antecedents de l'invention

Comme on sait, jusqu'à present les adhésifs de contact réutilisables sont utilisés dans l'industrie pour la confection d'étiquettes adhésives sur papier ou matériel plastique, pouvant aussi être utilisés comme fermeture d'enveloppes ou paquets adhésifs, ou comme fixation de garnitures hygiéniques ou pour réaliser et confectionner des chemises adhésives pour reliure.

Dans tous les cas cités antérieurement, il faut utiliser inévitablement des machines industrielles qui permettent en premier lieu l'application de produit adhésif sur les surfaces planes en papier ou plastique ou sur des tissus ou papier-carton, ce qui limite l'utilisation du produit adhésif de contact réutilisable aux usages considérés intéressants par l'industrie, alors que le produit ici proposé a un secteur beaucoup plus vaste d'application, et que, surtout, il offre la possibilité d'être utilisé dans des occasions multiples que l'imagination du propre usager peut considérer opportunes

Cependant, à notre connaissance, il n'existe pas actuellement, une invention ayant la caractéristique de permettre l'utilisation d'un adhésif de contact réutilisable et à applications multiples et pouvant en même temps être présenté et distribué en un rouleau formé à partir d'un ruban de type varié, de préférence en papier de silicone ou similaire.

### Description de l'invention

Le nouveau dispositif linéaire d'adhésifs de contact à applications multiples et réutilisable que cette invention propose constitue en lui-même une évidente nouveauté dans son champ d'application et offre en même temps toutes les caractéristiques signalées plus haut comme appropriées.

Plus concrètement, le nouveau dispositif linéaire d'adhésifs de contact à applications multiples et réutilisable, objet de l'invention, est formé à partir d'un ruban de papier siliconé, paraffiné ou similaire, de longueur et largeur variables; sur l'une des deux faces, concrètement sur la face qui sera utilisée comme revers, est appliquée une bande d'adhésif de contact à caractère réutilisable qui se présente comme un cordon laminé d'une certaine grosseur et largeur sur le ruban même qui forme le rouleau, support de sa présentation et distribution: l'enroulement progressif du ruban se réalise postérieurement de façon adéquate, le support pouvant être un mandrin en carton ou en plastique.

La bande de colle ou d'adhésif de contact réutilisable peut être fixée sur n'importe quelle superficie lisse, sans poussière ni graisse, permettant ensuite l'union avec un autre élément ou une autre superficie, assurant une union adéquate des objets et ayant la particularité de permettre leur séparation postérieure, lorsque l'usager le souhaite, détachant les objets facilement.

Evidemment, l'utilisation de l'invention est très simple et offre la possibilité, grâce au produit adhésif qui ne cristallise pas, de corriger postérieurement, les erreurs qui auraient pu se produire au moment de l'union ou fixation, facilitant la séparation des superficies ou objets unis, la difficultés de la séparation étant proporcionnelle à la superficie unie.

### Description des dessins

Pour complèter la présente description et afin de permettre une meilleure compréhension des caractéristiques de l'invention, ce mémoire descriptif est accompagné d'une page de plans, qui en sont partie intégrante, et sur laquelle sont représentés à titre illustratif et non limitatif, les éléments suivants:
La figure n°1 montre, en perspective, l'objet de l'invention présenté en rouleau, représentant la nouvelle disposition linéaire d'adhésifs de contact à usages multiples et réutilisables.
La figure n°2 correspond à une représentation graphique d'une application possible de l'objet de l'invention distribué sous la forme représentée sur la figure n°1.
La figure n°3 montre une autre possibilité d'application de l'objet de l'invention distribué comme le montre la figure n°1.

### Réalisation préferentielle de l'invention

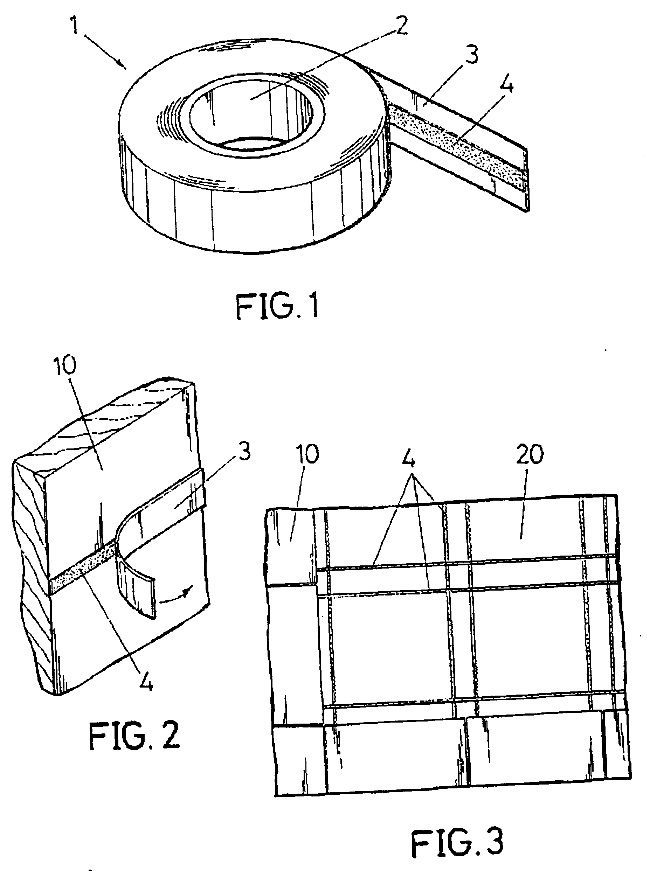

La figure n°1 permet d'observer que le nouveau dispositif linéaire d'adhésifs de contact à applications multiples et réutilisable préconisé est constitué par l'incorporation progressive d'un cordon (4) d'adhésif réutilisable, ayant la particularité de ne pas cristalliser et donc de ne pas durcir, qui est placé sur la face postérieure ou revers d'un ruban (3) de papier siliconé, paraffiné ou similaire, qui sert d'élément porteur et permet son enroulement progressif, avec des longueurs et largeurs différentes, sur un mandrin ou support (2), ce qui constitue le nouveau dispositif linéaire, objet de l'invention.

Suivant la figure n°2, on peut observer comment la bande adhésive (4) appliquée sur une superficie (10), se trouve située sur celle-ci préalablement nettoyée et dégraissée, permettant de retirer le ruban (3), préalablement dimensionné, de sorte que la bande adhésive (4) fixée sur la superficie (10) se trouve en position correcte pour que, comme le montre la figure n°3, un carreau, revêtement ou similaire (20) reste fixé à la superficie (10) grâce à la bande d'adhésif réutilisable (4)

Comme cela a déjà été dit dans la description de l'invention, si l'usager observe des anomalies dans la fixation des éléments devant être fixés (20), grâce au caractère non cristallisable du produit adhésif utilisé pour l'élaboration de la bande (4), le ruban (20) peut être retiré et replacé en position correcte.

Evidemment, comme cela a été dit dans la description de l'invention, la bande adhésive a de multiples possibilités.

Il ne semble pas nécessaire de s'étendre davantage sur la description pour qu'un expert en la matière comprenne la portée de l'invention et les avantages qui en découlent.

Les matériaux, forme, dimension et disposition des élements seront susceptibles de variations, pourvu qu'elles ne supposent pas une altération essentielle de l'invention.

Les termes descriptifs de ce mémoires devront être compris de façon large et non limitative.

## Revendications

1. Nouveau dispositif linéaire d'adhésifs de contact à applications multiples et réutilisable, constitué à partir d'un ruban (3) en papier siliconé, paraffiné ou similaire, à longueur et largeur variable, sur le revers ou face inférieure duquel est incorporé une bande (4) d'un produit adhésif de contact non cristallisable, la fixation progressive se réalisant par enroulement du ruban (3) sur un mandrin ou support (2).
